# EUROPÄISCHE PATENTSCHRIFT

(11) **EP 1 277 095 B1**
(45) Veröffentlichungstag und Bekanntmachung des Hinweises auf die Patenterteilung: **25.07.2007**
(21) Anmeldenummer: 01931418.6
(22) Anmeldetag: 06.04.2001
(51) Int. Cl.: G05B 19/048, G05B 19/042

(54) **SYSTEM UND VERFAHREN ZUR ÜBERWACHUNG EINER EINRICHTUNG ZUM MESSEN, STEUERN UND REGELN**
SYSTEM AND METHOD FOR THE MONITORING OF A MEASUREMENT AND CONTROL DEVICE
SYSTEME ET PROCEDE POUR CONTROLER UN DISPOSITIF DE MESURE, DE COMMANDE ET DE REGULATION

(30) Priorität: 14.04.2000 DE 10018859
(43) Veröffentlichungstag der Anmeldung: 22.01.2003
(73) Patentinhaber: ROBERT BOSCH GMBH, 70442 Stuttgart (DE)
(72) Erfinder: HAAS, Wolfgang, 70435 Stuttgart (DE); FRANK, Andreas, 71063 Sindelfingen (DE); MEIER, Thomas, 75428 Illingen (DE)
(86) Internationale Anmeldenummer: PCT/DE2001/001342
(87) Internationale Veröffentlichungsnummer: WO 2001/079948

(56) Entgegenhaltungen:
- US-A- 5 152 178
- PATENT ABSTRACTS OF JAPAN vol. 010, no. 247 (P-490), 26. August 1986 (1986-08-26) & JP 61 075405 A (DAIHATSU MOTOR CO LTD), 17. April 1986 (1986-04-17)

## Beschreibung

### Stand der Technik

Die Erfindung betrifft ein System zur Überwachung einer Einrichtung zum Messen, Steuern und Regeln (MSR-Einrichtung) nach dem Oberbegriff des Patentanspruchs 1 und ein entsprechendes Verfahren nach dem Oberbegriff des Patentanspruchs 11.

Bekannte Überwachungssysteme für MSR-Einrichtungen sehen vor, daß bei Auftreten einer Fehlfunktion das System in einen sogenannten sicheren Zustand übergeht. Der sichere Zustand bewirkt entweder eine Änderung des aktuellen Betriebszustandes der MSR-Einrichtung oder daß zu einem späteren Zeitpunkt eine Änderung des Betriebszustandes unmöglich wird. Es ist dann beispielsweise vorsehbar, daß bei Auftreten einer Fehlfunktion die MSR-Einrichtung, das von der MSR-Einrichtung gesteuerte System oder die MSR-Einrichtung und das gesteuerte System abgeschaltet werden.

Aus der DE 40 04 083 A1 ist ein System zur Steuerung und/oder Regelung einer Brennkraftmaschine bekannt. Dieses umfasst mehrere Sensoren, welche Signale erzeugen, die Betriebsparameter der Brennkraftmaschine repräsentieren. Anhand dieser Signale wird eine Fehlfunktionserkennung durchgeführt. Die Fehlfunktionsüberprüfung erfolgt innerhalb vorgegebener Teilbereiche mit einer geringeren Empfindlichkeit als außerhalb dieser vorgegebenen Teilbereiche. Wird eine Fehlfunktion festgestellt kann so zunächst überprüft werden, ob diese auf eine beeinträchtigte oder unvollständige Signalübertragung zurückzuführen ist. Nur wenn dies nicht der Fall ist, wird das System abgeschaltet. Ein Abschalten des Systems bei einer Fehlfunktion eines der Sensoren wird auf diese Weise vermieden.

So zeigt das Patent Abstract der JP 61075405 A vom 17.04.1986 einen Fehlerzähler. Wenn dieser Fehlerzähler einen bestimmten Wert erreicht, wird ein Alarmsignal ausgegeben, welches zur Systemabschaltung führt.

Nachteilig bei dem beschriebenen System ist, dass bei Auftreten bestimmter Fehlfunktionen das System sofort abgeschaltet wird. Das bedeutet zwar eine hohe Betriebssicherheit, aber auch eine unzureichende Verfügbarkeit.

Aufgabe der vorliegenden Erfindung ist es daher, eine Vorrichtung und ein Verfahren zur Überwachung einer MSR-Einrichtung vorzuschlagen, welche sowohl eine ausreichende Betriebssicherheit als auch eine befriedigende Verfügbarkeit gewährleisten.

Die Aufgabe bezüglich der Vorrichtung wird durch ein System nach Anspruch 1 gelöst.

Die auf das Verfahren bezogene Aufgabe wird durch ein Verfahren gemäß Anspruch 1 gelöst.

Vorteilhafte Ausgestaltungen der Erfindung ergeben sich aus den Unteransprüchen.

### Vorteile der Erfindung

Das erfindungsgemäße System zur Überwachung einer Einrichtung zum Messen, Steuern und Regeln weist eine Überwachungsvorrichtung auf, welche die Funktionsweise der MSR-Einrichtung überprüft. Dabei werden Fehlfunktionen der überprüften MSR-Einrichtung festgestellt Die Überwachungsvorrichtung kann außerdem den Betriebszustand der Einrichtung beeinflussen. Das System zeichnet sich dadurch aus, dass ein Zähler mit einem Zählerstand vorgesehen ist, das Feststellen einer Fehlfunktion den Zählerstand erhöht und die Beeinflussung des Betriebszustandes der MSR-Einrichtung in Abhängigkeit vom Zählerstand geschieht und dass ein erster Zählerstand des wenigsten einen Zählers existiert, bei dem bei Erreichen oder Überschreiten des ersten Zählerstandes ein Reset und/oder eine Fehlerreaktion auslösbar ist, wobei durch eine künstlich erzeugte Fehlfunktion, welche zu einer Erhöhung des Zählerstandes führt und die in das System eingegeben wird, der Abstand des Zählerstandes zum ersten Zählerstand verringert wird.

Eine Fehlfunktion wird zwar festgestellt, führt aber nicht notwendigerweise bzw. unmittelbar zu einer Beeinflussung des Betriebszustandes der MSR-Einrichtung, das heißt gegebenenfalls zum Abschalten der MSR-Einrichtung. Das Auftreten einer Fehlfunktion bewirkt zunächst lediglich, dass der Zählerstand des Zählers erhöht wird. Erst wenn der Zählerstand einen gewissen vorgegebenen Wert erreicht, führt dies zum Abschalten. Dieser Wert ist veränderbar und stellt die Reaktionsschwelle der Überwachungsvorrichtung dar. Der Anwender hat die Möglichkeit, durch Wahl der Reaktionsschwelle sein System zur Überwachung hinsichtlich Betriebssicherheit und Verfügbarkeit seinen Anforderungen entsprechend einzustellen.

Bevorzugt überprüft die Überwachungsvorrichtung die Funktionsweise der MSR-Einrichtung durch in regelmäßigen zeitlichen Abständen durchgeführte Kommunikationsvorgänge. Jeder Kommunikationsvorgang, welcher einen Datenaustausch zwischen Überwachungsvorrichtung und MSR-Einrichtung umfaßt, ergibt entweder eine Fehlfunktion oder eine korrekte Funktion. Durch Wahl der zeitlichen Abstände zwischen den Kommunikationsvorgängen kann daher auch die Reaktionszeit des Überwachungssystems festgesetzt werden.

In einer bevorzugten Ausführungsform bewirkt das Feststellen einer korrekten Funktion eine Verringerung des Zählerstandes des Zählers. Auf diese Weise wird verhindert, daß sporadisch auftretende Fehlfunktionen zum Abschalten der MSR-Einrichtung führen, da die festgestellten korrekten Funktionen den Zählerstand immer wieder verringern.

Von Vorteil ist es, wenn der Zählerstand unabhängig vom Auftreten von Fehlfunktionen zu beeinflussen ist. Dies ist dann sinnvoll, wenn in einigen Betriebszuständen die vorgegebene Reaktionsschwelle zu hoch erscheint. Das MSR-System kann beispielsweise durch gezielte Falschinformationen den Zähler der Überwachungsvorrichtung knapp unterhalb der Reaktionsschwelle halten. Dieses Halten des Zählers wird für die Dauer des speziellen, sicherheitskritischen Betriebszustandes aufrechterhalten. Damit verfügt das Überwachungssystem durch die kurze Reaktionszeit vom Auftreten eines Fehlers bis zur Reaktion der Überwachungsvorrichtung über die maximal mögliche Sicherheit.

Gemäß einer besonders bevorzugten Ausführungsform des erfindungsgemäßen Systems wird ein Zählerstand des wenigsten einen Zählers mit einem Schwellwert verglichen, wobei bei Erreichen oder Überschreiten des Schwellwertes ein Reset bzw. eine Fehlerreaktion ausgelöst wird. Die Überwachung eines derartigen Schwellwertes erweist sich in der Praxis als einfach und zuverlässig.

Zweckmäßigerweise wird unterhalb des Schwellwertes ein zweites Zählerniveau definiert, welches der Zählerstand nicht unterschreiten darf und bei Erreichen dessen eine künstlich erzeugte Fehlfunktion in das System eingegeben wird.

Es ist in diesem Zusammenhang denkbar, die Reaktionsschwelle bzw. den Schwellwert einstellbar bzw. variabel auszubilden. Mit dieser Maßnahme ist eine Anpassung an konkrete Betriebszustände möglich.

Auch durch Variation dieses zweiten Zählerniveaus ist eine gewünschte Verfügbarkeit bzw. Reaktionszeit des Systems flexibel einstellbar.

Somit kann auch im laufenden Betrieb situationsabhängig zwischen maximaler Sicherheit und maximaler Verfügbarkeit beliebig abgestuft gewählt werden.

Gemäß einer besonders bevorzugten Ausführungsform des erfindungsgemäßen Systems ist ein der Überwachungsvorrichtung zugeordneter erster Fehlerzähler und ein der zu überwachenden Einrichtung zugeordneter zweiter Fehlerzähler vorgesehen, welche periodisch zur Überwachung des Systems überprüfbar und/oder miteinander vergleichbar sind. Durch diese Maßnahme ist es möglich, mittels des ersten Zählers die Funktion der zu überwachenden Einrichtung, und mittels des zweiten Fehlerzählers die Funktion der Überwachungseinrichtung zu kontrollieren. Ein periodischer Vergleich der Zählerstände dieser beiden Fehlerzähler ermöglicht ferner in einfacher Weise eine Erkennung von sogenannten sporadischen Fehlern, wie in der Beschreibung weiter unten noch erläutert wird.

In diesem Zusammenhang erweist es sich als zweckmäßig, daß der erste Fehlerzähler zum Mitzählen eines Abbildes des Zählerstandes des zweiten Fehlerzählers einsetzbar ist. Mittels des ersten Fehlerzählers ist somit der sogenannte Erwartungswert des zweiten Fehlerzählers speicherbar.

Zweckmäßigerweise ist ein dritter Fehlerzähler vorgesehen, welcher zum Vergleich der Zählerstände der ersten und zweiten Fehlerzähler dient.

Das erfindungsgemäße Verfahren nach dem Oberbegriff des Anspruchs 11 sieht vor, daß ein Zähler verwendet wird, dessen Zählerstand beim Feststellen von Fehlfunktionen erhöht wird und daß die Beeinflussung des Betriebszustandes der überwachten Einrichtung in Abhängigkeit vom Zählerstand durchgeführt wird.

Bevorzugt wird die Funktionsweise der MSR-Einrichtung durch in regelmäßigen zeitlichen Abständen durchgeführte Kommunikationsvorgänge ausgeführt. Jeder Kommunikationsvorgang ergibt entweder eine Fehlfunktion oder eine korrekte Funktion.

Von Vorteil ist es, wenn eine korrekte Funktion durch eine Verringerung des Zählerstandes des Zählers registriert wird. Somit ist sichergestellt, daß auch sporadisch auftretende Fehlfunktionen nicht zu einer Beeinflussung des Betriebszustandes der MSR-Einrichtung führen.

Vorteilhafterweise kann der Zählerstand unabhängig vom Auftreten von Fehlfunktionen beeinflußt werden. So kann die Reaktionszeit des Überwachungssystems im laufenden Betrieb aktuellen Anforderungen angepaßt werden.

### Zeichnungen

Die vorliegende Erfindung wird anhand der beigefügten zwei Zeichnung näher erläutert. In dieser zeigt bzw. zeigen
- Figur 1: eine schematischer Darstellung einer bevorzugten Ausführungsform des erfindungsgemäßen Überwachungssystems,
- Figur 2: ein Diagramm zur Erläuterung einer bevorzugten Ausführungsform des erfindungsgemäßen Verfahrens,

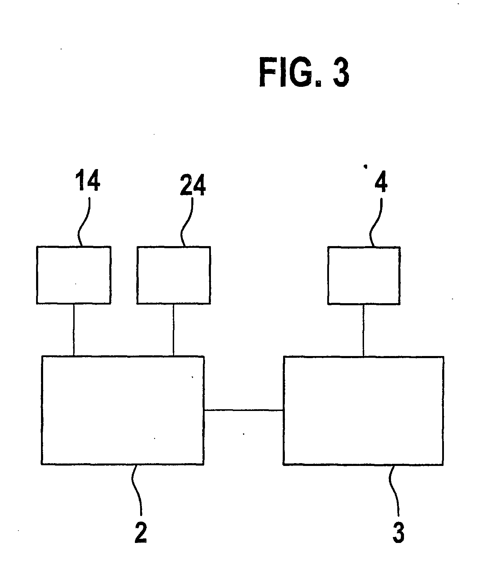

- Figur 3: eine der Figur 1 entsprechende Darstellung einer weiteren bevorzugten Ausführungsform des erfindungsgemäßen Überwachungssystems, wobei hier auf die (schematische) Darstellung der Brennkraftmaschine verzichtet ist,
- Figur 4,5: Diagramme zur Erläuterung eines möglichen zeitlichen Ablaufs des erfindungsgemäßen Verfahrens.

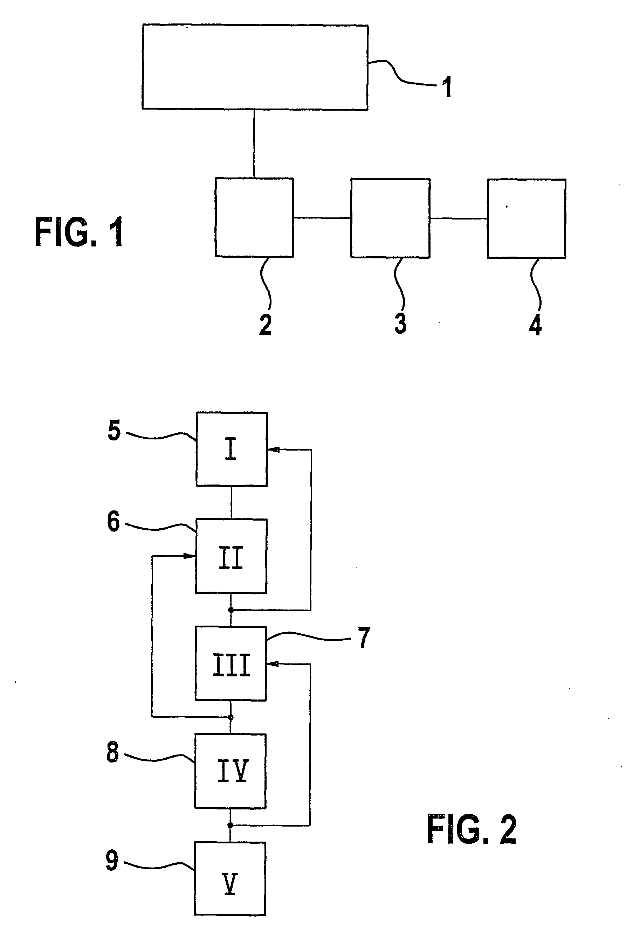

Figur 1 zeigt in schematischer Darstellung eine bevorzugte Ausführungsform des erfindungsgemäßen Überwachungssystems im Einsatz. Zu erkennen ist eine Brennkraftmaschine 1, eine Einrichtung 2 zum Messen, Steuern und Regeln (MSR-Einrichtung), eine Überwachungsvorrichtung 3 und ein Zähler 4.

Die Brennkraftmaschine 1 wird mit Hilfe der MSR-Einrichtung 2 gesteuert. Die MSR-Einrichtung 2 wiederum wird von der Überwachungsvorrichtung 3 überwacht. Diese Überwachung erfolgt durch Kommunikationsvorgänge zwischen der Überwachungsvorrichtung 3 und der MSR-Einrichtung 2. Wird eine Fehlfunktion festgestellt, erhöht sich der Zählerstand des Zählers 4. Wird eine korrekte Funktion registriert, verringert sich der Zählerstand. Sobald der Zählerstand einen gewissen Wert erreicht, nimmt die Überwachungsvorrichtung 3 einen sicheren Zustand ein. Dies hat zur Folge, daß die MSR-Einrichtung 2 und gegebenenfalls auch die Brennkraftmaschine 1 abgeschaltet werden.

Figur 2 verdeutlicht in einem Diagramm den Ablauf einer bevorzugten Ausführungsform des erfindungsgemäßen Verfahrens. Die römischen Ziffern in der Zeichnung geben den Zählerstand wieder.

Im Zustand 5 ist der Zählerstand I. Nach einer gewissen Zeitspanne erfolgt ein Kommunikationsvorgang zwischen der Überwachungsvorrichtung 3 und der MSR-Einrichtung 2. Wird hierbei eine Fehlfunktion festgestellt, erhöht sich der Zählerstand auf II, wie in Zustand 6 dargestellt. Wiederum nach einer gewissen Zeitspanne erfolgt ein weiterer Kommunikationsvorgang. Wird eine Fehlfunktion festgestellt, erhöht sich der Zählerstand auf III, Zustand 7. Andernfalls verringert sich der Zählerstand auf I, dies entspricht Zustand 5. Beträgt der Zählerstand III, entsprechend Zustand 7, bewirkt das Feststellen einer korrekten Funktion die Verringerung des Zählerstandes auf II, Zustand 6. Wird in Zustand 7 eine Fehlfunktion festgestellt, erhöht sich der Zählerstand auf IV, dies entspricht Zustand 8. In Zustand 8 erfolgt erneut ein Kommunikationsvorgang. Wird bei diesem eine korrekte Funktion ermittelt, verringert sich der Zählerstand auf III, Zustand 7. Wird in Zustand 8 eine Fehlfunktion festgestellt, erhöht sich der Zählerstand auf V, entsprechend Zustand 9. Dieser Zählerstand bewirkt, daß das Überwachungssystem 3 den sicheren Zustand einnimmt. Dies hat zur Folge, daß die MSR-Einrichtung 2 und die Brennkraftmaschine 1 abgeschaltet werden. Der Zählerstand V stellt somit für das dargestellte Ausführungsbeispiels die Reaktionsschwelle des Überwachungssystems dar.

Das erfindungsgemäße System bzw. das erfindungsgemäße Verfahren sind gemäß einer weiteren bevorzugten Ausführungsform mit einer Anzahl von kooperierenden Fehlerzählern realisierbar. Dies sei im folgenden anhand eines Funktionsrechner-Überwachungsmoduls unter Einsatz von drei Fehlerzählern beschrieben: Ein erster Fehlerzähler 4 ist in dem Überwachungsmodul 3 einer MSR-Einrichtung (Funktionsrechner) 2 vorgesehen. Ein zweiter Fehlerzähler 14, welcher eine Kopie des Fehlerzählers 4 ist, ist in der MSR-Einrichtung 2 vorgesehen. Die Aufgabe des Fehlerzählers 4 besteht darin, falsche Antworten der MSR-Einrichtung 2 zu zählen. Der Fehlerzähler 14 in der MSR-Einrichtung 2 dient dazu, den erwarteten Wert des Fehlerzählers 4 zu speichern. Zweckmäßigerweise ist ein weiterer Fehlerzähler 24 in der MSR-Einrichtung vorgesehen, welcher Unstimmigkeiten zwischen den Zählern 4 und 14 zählt.

Für die Zähler ist beispielsweise die folgende Strategie anwendbar: Es sei beispielhaft davon ausgegangen, daß bei Erreichen eines Zählwertes von 13 durch den Fehlerzähler 4 eine Beeinflussung des Betriebszustandes der MSR-Einrichtung 2 bewirkt wird. Im folgenden sei beispielhaft von einem Reset ausgegangen. Gestartet wird beispielsweise mit einem Start-Zählerstand von 11, um eine Aktivierung einer defekten MSR-Einrichtung nach der Initialisierung zu verhindern. Trifft eine richtige Antwort beispielsweise von der MSR-Einrichtung 2 in dem Fehlerzähler 4 ein, wird dessen Zählerstand um 1 erniedrigt (dies geschieht stets im Falle einer richtigen Antwort, sofern der Zählerstand größer 0 ist). Wird eine falsche Antwort erkannt, werden drei Fehlerpunkte addiert. Für den Fall, daß ein Zählerstand größer oder gleich 13 erreicht wird, wird ein Reset der MSR-Einrichtung ausgelöst.

Zur Prüfung der korrekten Funktion des Überwachungsmoduls 3 streut die MSR-Einrichtung 2 bei einem entsprechenden Zählerstand des Fehlerzählers 4 gezielt falsche Antworten ein, um zu prüfen, ob und inwieweit das Überwachungsmodul 3 falsche Antworten erkennt und dessen Fehlerzähler 4 entsprechend dieser Antworten richtig zählt. Da systembedingt der MSR-Einrichtung der aktuelle Stand des Zählers 4 nur bei beispielsweise jeder 32. Frage-Antwort-Kommunikation (Kommunikationsrahmen) bekannt wird, wird der Fehlerzähler 14 in der MSR-Einrichtung dazu verwendet, intern in der MSR-Einrichtung ein Abbild des Fehlerzählers 4 mitzuzählen. Der Fehlerzähler 14 enthält daher den sogenannten Erwartungswert des Fehlerzählers 4. Meldet das Überwachungsmodul 3 anstelle der 32. Frage im Zyklus den Stand seines Fehlerzähler 4, dann vergleicht die MSR-Einrichtung den Erwartungswert, d. h. den Zählwert des Fehlerzählers 14, mit dem gemeldeten Wert, also dem Zählwert des Fehlerzählers 4. Stimmen diese beiden Zählwerte nicht überein, wird der dritte Fehlerzähler 24 um drei Punkte erhöht. Bei Übereinstimmung wird der Zählwert des Fehlerzählers 24 um 1 erniedrigt.

Stets zu berücksichtigen bei Systemen zur Überwachung von MSR-Einrichtungen sind Fehlertoleranzzeiten. Im vorliegend beschriebenen Ausführungsbeispiel ist das Überwachungskonzept in drei Ebenen hierarchisch aufgebaut, wobei die erste Ebene von der MSR-Einrichtung 2 gebildet wird, welche von der zweiten Ebene, einer internen und nicht im einzelnen dargestellten softwaremäßigen Überprüfung überwacht wird. Die dritte Ebene, welche im wesentlichen durch das Überwachungsmodul 3 überwacht wird, dient zur Überwachung der zweiten Ebene, d. h. der Hardware, mittels welcher die Softwareüberwachung implementiert ist.

Kommt es - gemäß einer ersten Fallkonstellation - zu einem Fehler in der ersten Ebene, d. h. der MSR-Einrichtung, hängt die Toleranzzeit von der Reaktionsgeschwindigkeit der zweiten Ebene, d. h. der internen Softwareüberwachung, ab, welche zweckmäßigerweise direkten Zugriff auf die Endstufen der MSR-Einrichtung hat.

Ein derartiger Zugriffspfad über einen Rechnerpin trägt typischerweise den Namen "PEN" (= Power ENable) und schaltet beispielsweise die Aktuatorik eines angeschlossenen Motors hochohmig.

Ein weiterer Fall besteht darin, daß ein Fehler in der Rechnerhardware (MSR-Hardware) auftritt, so daß der Fehler über die dritte Ebene erkannt werden muß.

Ein Hardwarefehler führt zu einer falschen Antwort der MSR-Einrichtung. In diesem Fall erkennt das Überwachungsmodul 3 die falsche Antwort und wiederholt beispielsweise die falsch beantwortete Frage, bis die Antwort richtig ist. Übersteigt der Fehlerzähler 4 hierbei seine Reaktionsschwelle, bevor die Frage richtig beantwortet ist, löst das Überwachungsmodul 3 einen Reset der MSR-Einrichtung 2 aus. Die Fehlertoleranzzeit hängt nun davon ab, wie viele falsche Antworten eintreffen müssen, damit der Fehlerzähler 4 die Reaktionsschwelle überschreitet. Bei einem Stand des Fehlerzählers von 0 sind das beispielsweise fünf falsche Antworten in Folge, um die beispielhaft gewählte Schwelle von 13 zu überschreiten. Für den Fall, daß jede Frage-Antwort-Kommunikation typischerweise 40 ms dauert, ergibt sich hier eine Reaktionszeit von etwa 200 ms des Überwachungsmoduls.

Da in der MSR-Einrichtung mittels des Fehlerzählers 14 ein Abbild des Fehlerzählers 4 mitgeschrieben wird, kann der Fehlerzähler 4 durch gezielte falsche Antworten beeinflußt werden, um ihn näher an der Reaktionsschwelle zu halten. Dadurch tritt aber eine unbekannte Größe in den Vordergrund, nämlich das Auftreten von so genannten "sporadischen Fehlern". Dies sind Fehler, die zufällig aufgrund von meist äußeren Einflüssen auftreten und unvorhersehbar sind. Das Überwachungsmodul erkennt auf falsche Antwort und erhöht seinen Fehlerzähler 4. Diese Fehler können natürlich nicht im Erwartungswert des Zählers 14 mitprotokolliert werden, da die MSR-Einrichtung von einer richtig gesendeten Antwort ausgeht. Diese Unstimmigkeiten werden bei der Rückmeldung des Fehlerzählers 4 anstelle jeder 32. Frage entdeckt und führen zu einer Erhöhung des Zählerstandes des Zählers 24.

Seltene sporadisch auftretende Fehler sollten nicht zu einem Reset des Systems führen, wenn hierdurch Beeinträchtigungen für den Benutzer auftreten. Diese Bedingung schränkt natürlich die Möglichkeiten einer Verkürzung der Fehlertoleranzzeit über die "Niveauregelung" des Fehlerzählers in der MSR-Einrichtung ein. Häufige sporadische Fehler sollten jedoch zu einem Reset führen, wobei hier als Beispiel EMV-verseuchte Hochspannungsleitungen zu nennen sind, welche einen sicheren Betrieb nicht gewährleisten können.

Anhand eines Beispiels soll die Maßgabe erläutert werden, dass ein seltener sporadischer Fehler nicht zu einem sofortigen Systemreset führen soll. Dies bedeutet, dass der Zähler 4 trotz der eingestreuten falschen Antworten höchstens den Zählerstand 10 erreichen darf: Fehlerzähler = 10 → richtige Antwort → Fehlerzähler = 9 → richtige Antwort → Fehlerzähler = 8 → richtige Antwort → Fehlerzähler = 7 → gezielte falsche Antwort → Fehlerzähler = 10 → ...

Das Auftreten eines sporadischen Fehlers erhöht den Zählerstand des Zählers 4 um drei Punkte, d. h. dies würde zu einem Zählerstand von 13 führen. Die längste Zeit bis zur Reaktion dauert bei einem Fehlerzählerstand von 7 die Dauer von drei falschen Antworten, d. h. 3 × 40 ms = 120 ms.

Da der Zähler 14 in der MSR-Einrichtung nur nach jedem 32. Kommunikationsrahmen mit dem wahren Stand des Zählers 4 in dem Überwachungsmodul 3 abgeglichen werden kann, darf innerhalb dieser Zeit nur ein sporadischer Fehler auftreten, da damit die Reserve für diesen Zeitraum aufgebraucht ist. Deshalb dürfen sporadische Fehler nur im minimalen Abstand von 31 Rahmen = 31 × 40 ms = 1,24 s auftreten, ansonsten lösen sie einen (ungewollten) Reset aus. Sollen zwei sporadische Fehler innerhalb einer Zeit von 1,24 s zulässig sein, erhöht sich die maximal vorkommende Toleranzzeit auf 160 ms (Zulässigkeit einer zusätzlichen falschen Antwort). Zur Beurteilung der Häufigkeit des Auftretens von sporadischen Fehlern sind Erprobungen im realen System notwendig.

Zur Verringerung der Gefahr eines Resets aufgrund von sporadischen Fehlern kann die "Niveau-Regulierung" des Zählerstandes des Fehlerzählers 4 fahrsituationsabhängig vorgenommen werden. Wie das "Zählerniveau" am günstigsten reguliert wird, hängt von verschiedenen Randbedingungen (geforderte Toleranzzeit, geforderte Störungsempfindlichkeit usw.) ab und muß ebenfalls im realen System erprobt werden.

Es sei darauf hingewiesen, daß im Überwachungsmodul 3 der RAM-Test als Beschreibbarkeitsprüfung ausgeführt sein kann, so daß sich ein sogenannter "schlafender Fehler" bilden kann. Sollte im Fehlerzähler 4 ein Bitkipper einen zu niedrigen Wert verursachen, dann kann die Strategie der "Niveau-Regulierung" versagen.

In einem dritten Fall kann die Kommunikation aus unbekannten bzw. beliebigen Gründen abbrechen, so daß das Überwachungsmodul 3 nach z. B. 10,51 ms auf Time Out der Antwort erkennt und die Endstufen der MSR-Einrichtung abschaltet und einen Reset auslöst. Im ungünstigsten Fall muß noch die Zeit für das Stellen einer Frage eingerechnet werden, das sind beispielsweise 100 ms, so daß insgesamt mit einer Verzögerungszeit von 20,51 ms im schlechtesten Fall gerechnet werden muß.

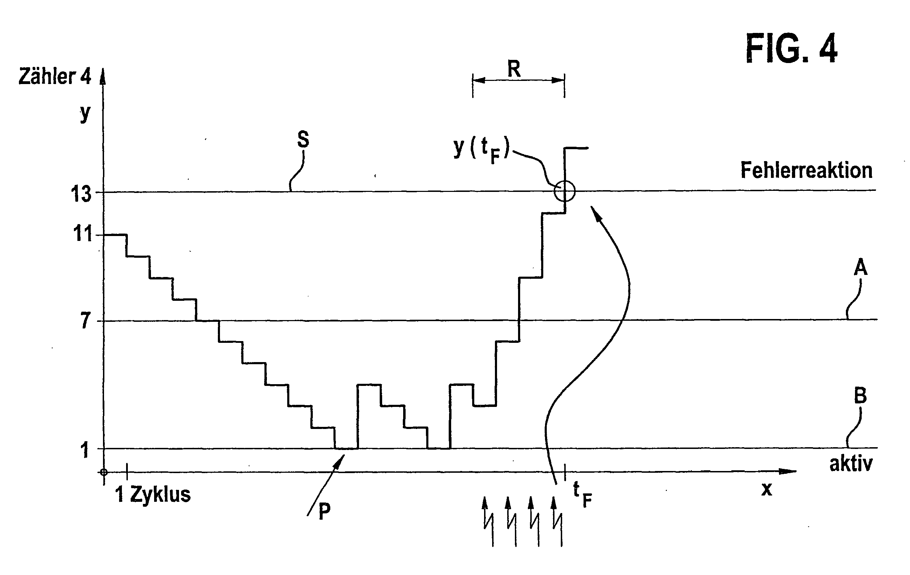

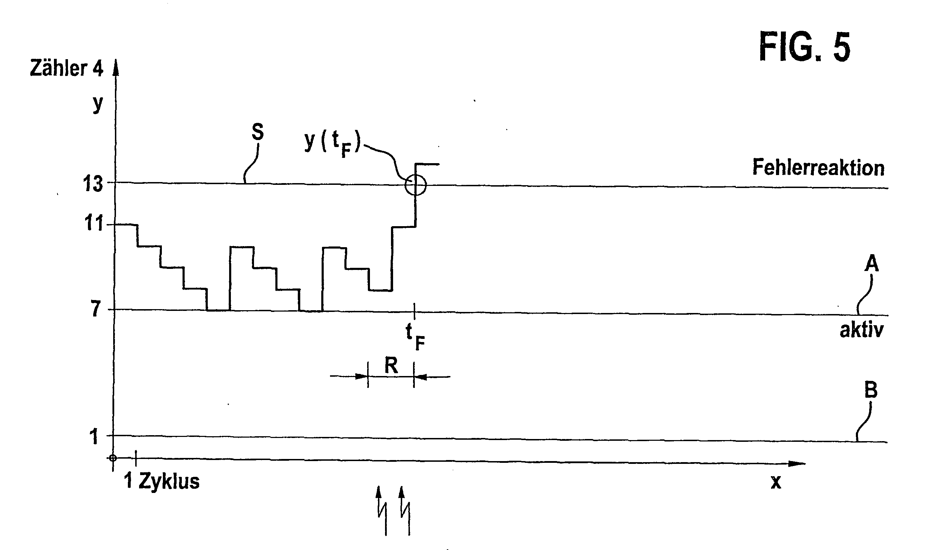

Das erfindungsgemäße Verfahren wird nun noch einmal beispielhaft anhand der Diagramme der Figuren 4 und 5 erläutert.

In diesen Diagrammen stellt die x-Achse die Zeit (unterteilt in einzelne Zyklen), und die y-Achse den Zählerstand des Zählers 4 dar.

In der Figur 4 sind 3 spezielle, noch im einzelnen zu erläuternde Zählerstände eingezeichnet. Bei dem Zählerstand 13 handelt es sich um einen Schwellwerts, welcher nicht überschritten werden darf. Im Falle eines Überschreitens dieses Schwellwerts kommt es zu einem Reset bzw. einer Fehlerreaktion des Systems bzw. des Zählerstandes. Auf dem Zählerstand 7 ist ein Zählerniveau A, und auf dem Zählerstand 1 ein Zählerniveau B eingezeichnet. Hiermit soll verdeutlicht werden, daß gemäß einer bevorzugten Ausführungsform des erfindungsgemäßen Verfahrens ein unter dem Schwellwert liegendes zweites Zählerniveau variierbar ist. Gemäß der in Figur 4 dargestellten Ausführungsform ist das Zählerniveau B (Zählerstand 1) aktiv, d.h. es ist ein Absinken des Zählerstandes bis auf den Wert 1 möglich, bevor eine künstlich eingestreute falsche Antwort den Zählerstand um den Wert 3 erhöht (siehe Pfeil P). Man erkennt, daß bei einem Schwellwert von 13 und einem unteren möglichen Zählerstand von 1 bis zu 4 Fehler toleriert werden, ohne daß es zu einer Fehlerreaktion bzw. einem Reset des Systems kommt. Mit der Einstellung dieser Parameter hat das System eine hohe Verfügbarkeit und hohe Toleranz, und gleichzeitig eine relativ lange Reaktionszeit. Im Ausführungsbeispiel der Figur 4 beträgt eine typische Reaktionszeit R 4 Zyklen. Beispielhaft sind 4 Fehlerereignisse mittels Blitzpfeilen dargestellt, deren Auftreten an einem Zeitpunkt t_{F} zu einem Reset (nicht dargestellt) führt, da im Punkt y(t_{F}) der Schwellwert überschritten ist.

Anhand der Figur 5 wird nun verdeutlicht, wie eine kürzere Reaktionszeit erzielbar ist.

Man erkennt, daß gemäß der Ausführungsform der Figur 5 das Zählerniveau A mit dem Zählerstand von 7 aktiv ist. D.h., ein Absinken des Zählerstandes unter den Wert 7 wird nicht zugelassen. Es folgt, daß gemäß dieser Ausführungsform typischerweise lediglich ein Fehler toleriert wird, bevor es zu einer Fehlerreaktion durch Erreichen des Schwellwertes 13 kommt. Die Reaktionszeit R beträgt hier lediglich zwei Zyklen. Zur Veranschaulichung sind wiederum Blitzpfeile sowie die Punkte t_{F} und y(t_{F}) dargestellt.

Es sei schließlich angemerkt, daß es auch möglich wäre, den Schwellwert variable auszubilden. In diesem Fall könnte auch eine variable Ausbildung des unteren Zählerniveaus verzichtet werden.

## Patentansprüche

1. System zur Überwachung einer Einrichtung (2) zum Messen, Steuern und Regeln, welches eine Überwachungsvorrichtung aufweist, welche die Funktionsweise der Einrichtung (2) überprüft, dabei Fehlfunktionen der Einrichtung (2) feststellt und den Betriebszustand der Einrichtung (2) beeinflussen kann, wobei wenigstens ein Zähler (4, 14, 24) vorgesehen ist und das Feststellen einer Fehlfunktion einen Zählerstand des wenigstens einen Zählers erhöht und daß ein erster Zählerstand des wenigsten einen Zählers (4, 14, 24) existiert bei dem bei Erreichen oder Überschreiten des ersten Zählerstandes ein Reset und/oder eine Fehlerreaktion auslösbar ist, **dadurch gekennzeichnet, daß** durch eine künstlich erzeugte Fehlfunktion, welche zu einer Erhöhung des Zählerstands führt und die in das System eingegeben wird der Abstand des Zählerstandes zum ersten Zählerstand verringert wird.

2. System nach Anspruch 1, **dadurch gekennzeichnet, daß** die Überwachungsvorrichtung (3) die Funktionsweise der Einrichtung (2) durch in regelmäßigen zeitlichen Abständen durchgeführte Kommunikationsvorgänge zwischen Überwachungsvorrichtung (3) und Einrichtung (2) überprüft und jeder Kommunikationsvorgang eine Fehlfunktion oder eine korrekte Funktion ergibt.

3. System nach Anspruch 1 oder 2, **dadurch gekennzeichnet, daß** das Feststellen einer korrekten Funktion eine Verringerung des Zählerstandes des Zählers (4) bewirkt.

4. System nach einem der Ansprüche 1 bis 3, **dadurch gekennzeichnet, daß** der Zählerstand unabhängig vom Auftreten von Fehlfunktionen zu beeinflussen ist.

5. System nach Anspruch 1, **dadurch gekennzeichnet, daß** der erste Zählerstand mit einem Schwellwert vergleichbar ist und ein unterhalb des Schwellwertes liegendes zweites Zählerniveau definierbar ist, welches der Zählerstand des wenigstens einen Zählers (4, 14, 24) nicht unterschreiten darf, und bei Erreichen dessen die künstlich erzeugte Fehlfunktion, welche zu einer Erhöhung des Zählerstands führt, in das System eingegeben wird.

6. System nach Anspruch 5, **dadurch gekennzeichnet, daß** das zweite Zählerniveau und/oder der Schwellwert variierbar ist.

7. System nach einem der vorstehenden Ansprüche, **gekennzeichnet durch** einen der Überwachungsvorrichtung (3) zugeordneten ersten Fehlerzähler (4) und einen der zu überwachenden Einrichtung (2) zugeordneten zweiten Fehlerzähler (14), wobei die ersten und zweiten Fehlerzähler periodisch zur Überwachung des Systems überprüfbar und/oder miteinander vergleichbar sind.

8. System nach Anspruch 7, **dadurch gekennzeichnet, daß** der erste Fehlerzähler (14) zum Mitzählen eines Abbildes des Zählerstandes des zweiten Fehlerzählers (4) einsetzbar ist.

9. System nach Anspruch 8, **gekennzeichnet durch** einen dritten Fehlerzähler (24), welcher zum Vergleich der Zählerstände der ersten und zweiten Fehlerzähler (4, 14) dient.

10. Verfahren zur Überwachung einer Einrichtung zum Messen, Steuern und Regeln, bei der die Funktionsweise der überwachten Einrichtung durch eine Überwachungsvorrichtung überprüft wird, auftretende Fehlfunktionen festgestellt werden und der Betriebszustand der überwachten Einrichtung beeinflußt werden kann, wobei wenigstens ein Zähler (4, 14, 24) verwendet wird, dessen Zählerstand beim Feststellen von Fehlfunktionen erhöht wird und daß ein erster Zählerstand existiert bei dem bei Erreichen oder Überschreiten des ersten Zählerstandes ein Reset und/oder eine Fehlerreaktion ausgelößt wird dadruch **gekennzeichnet**, daß durch eine künstlich erzeugte Fehlfunktion, welche zu einer Erhöhung des Zählerstands führt der Abstand des Zählerstandes zum ersten Zählerstand verringert wird.

11. Verfahren nach Anspruch 10, **dadurch gekennzeichnet, daß** die Funktionsweise der Einrichtung (2) zum Messen, Steuern und Regeln durch in regelmäßigen zeitlichen Abständen durchgeführte Kommunikationsvorgänge zwischen Überwachungsvorrichtung (3) und Einrichtung (2) ausgeführt wird, wobei jeder Kommunikationsvorgang eine Fehlfunktion oder eine korrekte Funktion meldet.

12. Verfahren nach einem der Ansprüche 10 oder 11, **dadurch gekennzeichnet, daß** eine korrekte Funktion durch eine Verringerung des Zählerstandes des Zählers (4, 14, 24) registriert wird.

13. Verfahren nach einem der Ansprüche 10 bis 12, **dadurch gekennzeichnet, daß** der Zählerstand unabhängig vom Auftreten von Fehlfunktionen beeinflußt werden kann.

14. Verfahren nach Anspruch 10, **dadurch gekennzeichnet, daß** ein Zählerstand des wenigsten einen Zählers (4, 14, 24) mit einem Schwellwert verglichen wird ein unterhalb des schwellwertes liegendes zweites Zählerniveau definiert wird, welches der Zählerstand des wenigsten einen Zählers (4, 14, 24) nicht unterschreiten darf und bei Erreichen dessen eine künstlich erzeugte Fehlfunktion, welche eine Erhöhung des Zählerstandes bewirkt, erzeugt wird.

15. Verfahren nach Anspruch 14, **dadurch gekennzeichnet, daß** das zweite Zählerniveau und/oder der Schwellwert zur Einstellung einer gewünschten Verfügbarkeit bzw. Reaktionszeit variiert wird.

## Claims

1. System for monitoring a device (2) for measurement, open-loop control and closed-loop control, which system has a monitoring apparatus which checks the functionality of the device (2), determines malfunctions in the device (2) in the process and can influence the operating state of the device (2), with at least one counter (4, 14, 24) being provided and determination of a malfunction increasing a counter reading of the at least one counter, and with a first counter reading of the at least one counter (4, 14, 24) existing, at which a reset and/or a fault response can be triggered when the first counter reading is reached or exceeded, **characterized in that** the difference between the counter reading and the first counter reading is reduced by an artificially generated malfunction which leads to an increase in the counter reading and which is entered into the system.

2. System according to Claim 1, **characterized in that** the monitoring apparatus (3) checks the functionality of the device (2) using communication operations between the monitoring apparatus (3) and the device (2) which are carried out at regular time intervals, and each communication operation yields a malfunction or correct functioning.

3. System according to Claim 1 or 2, **characterized in that** the determination of correct functioning causes a reduction in the counter reading of the counter (4).

4. System according to one of Claims 1 to 3, **characterized in that** the counter reading can be influenced independently of the occurrence of malfunctions.

5. System according to Claim 1, **characterized in that** the first counter reading can be compared with a threshold value, and a second counter level, which is below the threshold value and must not fall below the counter reading of the at least one counter (4, 14, 24), can be defined, and the artificially generated malfunction, which leads to an increase in the counter reading, is entered into the system when the said second counter level is reached.

6. System according to Claim 5, **characterized in that** the second counter level and/or the threshold value can be varied.

7. System according to one of the preceding claims, **characterized by** a first fault counter (4) which is associated with the monitoring apparatus (3) and a second fault counter (14) which is associated with the device (2) to be monitored, it being possible for the first and second fault counters to be periodically checked and/or compared with one another in order to monitor the system.

8. System according to Claim 7, **characterized in that** the first fault counter (14) can be used to include a copy of the counter reading of the second fault counter (4) .

9. System according to Claim 8, **characterized by** a third fault counter (24) which serves to compare the counter readings of the first and second fault counters (4, 14).

10. Method for monitoring a device for measurement, open-loop control and closed-loop control, in which method the functionality of the monitored device is checked by a monitoring apparatus, malfunctions which occur are determined and the operating state of the monitored device can be influenced, with at least one counter (4, 14, 24) being used whose counter reading is increased when malfunctions are determined, and with a first counter reading existing, at which a reset and/or a fault response are/is triggered when the first counter reading is reached or exceeded, **characterized in that** the difference between the counter reading and the first counter reading is reduced by an artificially generated malfunction which leads to an increase in the counter reading.

11. Method according to Claim 10, **characterized in that** the functionality of the device (2) for measurement, open-loop control and closed-loop control is implemented by communication operations between the monitoring apparatus (3) and the device (2) which are carried out at regular time intervals, with each communication operation signalling a malfunction or correct functioning.

12. Method according to one of Claims 10 or 11, **characterized in that** correct functioning is registered by a reduction in the counter reading of the counter (4, 14, 24).

13. Method according to one of Claims 10 to 12, **characterized in that** the counter reading can be influenced independently of the occurrence of malfunctions.

14. Method according to Claim 10, **characterized in that** a counter reading of the at least one counter (4, 14, 24) is compared with a threshold value, a second counter level, which is below the threshold value and must not fall below the counter reading of the at least one counter (4, 14, 24), is defined, and an artificially generated malfunction, which causes an increase in the counter reading, is generated when the said second counter level is reached.

15. Method according to Claim 14, **characterized in that** the second counter level and/or the threshold value are/is varied in order to set a desired availability and/or response time.

## Revendications

1. Système de surveillance d'une installation (2) de mesure, commande et régulation, comportant un dispositif de surveillance qui contrôle le fonctionnement de l'installation (2), constate les défauts de fonctionnement de l'installation (2) et peut influencer l'état de fonctionnement de l'installation (2), avec au moins un compteur (4, 14, 24) dont l'état de comptage est relevé par la constatation d'un défaut de fonctionnement, et avec au moins un premier état de comptage d'au moins un compteur (4, 14, 24) qui, lorsque le premier état de comptage est atteint ou dépassé, déclenche une remise à l'état initial et/ou une réaction de défaut,
**caractérisé en ce qu'**
on diminue l'écart entre l'état de comptage et le premier état de comptage par un défaut de fonctionnement généré artificiellement, se traduisant par une augmentation de l'état de comptage, introduit dans le système.

2. Système selon la revendication 1,
**caractérisé en ce que**
le dispositif de surveillance (3) contrôle le fonctionnement de l'installation (2) par des opérations de communication exécutées à des intervalles réguliers entre le dispositif de surveillance (3) et l'installation (2), et chaque opération de communication donne un défaut de fonctionnement ou un fonctionnement correct.

3. Système selon la revendication 1 ou 2,
**caractérisé en ce que**
la constatation d'un fonctionnement correct produit une diminution de l'état de comptage du compteur (4).

4. Système selon l'une des revendications 1 à 3,
**caractérisé en ce que**
l'état de comptage est influencé indépendamment de l'arrivée de défaut de fonctionnement.

5. Système selon la revendication 1,
**caractérisé en ce qu'**
on compare le premier état de comptage à un seuil et on définit un second niveau de comptage situé en dessous du seuil, second niveau en dessous duquel l'état de comptage d'au moins un compteur (4, 14, 24) ne doit pas dépasser et qui s'il est atteint engendre dans le système défaut de fonctionnement le défaut de fonctionnement artificiel, produisant une augmentation de l'état de comptage.

6. Système selon la revendication 5,
**caractérisé en ce que**
le second niveau de comptage et/ou le seuil sont variables.

7. Système selon l'une des revendications précédentes,
**caractérisé par**
un premier compteur de défaut (4) associé au dispositif de surveillance (3) et un second compteur de défaut (14) associé à l'installation (2) à surveiller,
le premier et le second compteur de défaut étant contrôlés périodiquement pour contrôler le système et/ou étant comparés entre eux.

8. Système selon la revendication 7,
**caractérisé en ce que**
le premier compteur de défaut (14) est utilisé pour compter également l'image de l'état de comptage du second compteur de défaut (4).

9. Système selon la revendication 8,
**caractérisé par**
un troisième compteur de défaut (24) servant à comparer les états de comptage du premier et du second compteur de défaut (4, 14).

10. Procédé de surveillance d'une installation de mesure, de commande et de régulation, selon lequel on contrôle le fonctionnement de l'installation surveillée par un dispositif de surveillance, on détermine les défauts de fonctionnement produits et on influence l'état de fonctionnement de l'installation surveillée,
on utilise au moins un compteur (4, 14, 24) dont l'état de comptage est augmenté lorsqu'on constate des défauts de fonctionnement, avec un premier état de comptage qui, lorsqu'il est atteint ou dépassé, déclenche la remise à l'état initial et/ou une réaction de défaut,
**caractérisé en ce qu'**
on diminue l'écart entre l'état de comptage et le premier état de comptage par un défaut de fonctionnement généré artificiellement et qui produit une augmentation de l'état de comptage

11. Procédé selon la revendication 10,
**caractérisé en ce qu'**
on assure le fonctionnement de l'installation (2) de mesure, de commande et de régulation, par des opérations de communication exécutées régulièrement à des intervalles de temps, entre le dispositif de surveillance (3) et l'installation (2), et chaque opération de commutation signale un défaut de fonctionnement ou un fonctionnement correct.

12. Procédé selon l'une des revendications 10 ou 11,
**caractérisé en ce qu'**
on enregistre un fonctionnement correct par une diminution de l'état de comptage du compteur (4, 14, 24).

13. Procédé selon l'une des revendications 10 à 12,
**caractérisé en ce qu'**
on influence l'état de comptage indépendamment de l'occurrence de défaut de fonctionnement.

14. Procédé selon la revendication 10,
**caractérisé en ce qu'**
on compare l'état de comptage d'au moins un compteur (4, 14, 24) à un seuil et on définit un second niveau de comptage situé en dessous du seuil, second niveau que l'état de comptage d'au moins un compteur (4, 14, 24) ne doit pas dépasser vers le bas et qui, s'il est atteint, génère une fonction de défaut, artificiellement, produisant une augmentation de l'état de comptage.

15. Procédé selon la revendication 14,
**caractérisé en ce qu'**
on modifie le second niveau de comptage et/ou le seuil pour régler une disponibilité ou un temps de réaction souhaités.
